Europäisches Patentamt

European Patent Office

Office européen des brevets

(11) Veröffentlichungsnummer: **0 149 132**
**B1**

(12) **EUROPÄISCHE PATENTSCHRIFT**

(45) Veröffentlichungstag der Patentschrift:
03.05.89

(51) Int. Cl.⁴: **G 01 F 23/26,** E 03 C 1/24,
G 05 D 9/12

(21) Anmeldenummer: 84115158.2

(22) Anmeldetag: 11.12.84

(54) **Niveausignaleinrichtung für Badewannen.**

(30) Priorität: 30.12.83 DE 3347520

(43) Veröffentlichungstag der Anmeldung:
24.07.85 Patentblatt 85/30

(45) Bekanntmachung des Hinweises auf die Patenterteilung:
03.05.89 Patentblatt 89/18

(84) Benannte Vertragsstaaten:
AT BE CH DE FR GB IT LI LU NL

(56) Entgegenhaltungen:
DE-A- 1 609 195
DE-A- 1 802 311
DE-A- 2 417 708
DE-A- 2 853 981
GB-A- 1 562 141

(73) Patentinhaber: Ucosan B.V., Dwazziewegen 13,
NL-9301 ZR Roden (NL)

(72) Erfinder: Smilda, Roelof c/o KEIL & SCHAAFHAUSEN,
Patentanwälte Ammelburgstrasse 34, D-6000 Frankfurt
am Main 1 (DE)

(74) Vertreter: Keil, Rainer A., Dipl.-Phys. Dr. et al, KEIL &
SCHAAFHAUSEN Patentanwälte Eysseneckstrasse 31,
D-6000 Frankfurt am Main 1 (DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

ACTORUM AG

## Beschreibung

Die Erfindung bezieht sich auf die Verwendung eines kapazitiven Näherungsschalters zum Abfühlen des Wasserstandes an einer Badewanne aus Kunststoff, wie beispielsweise Polyacryl, mit einer Whirlpool-Einrichtung.

Aus DE-A 1 609 195 ist ein Meldegerät für die Wassereinlaufhöhe in Badewannen bekannt, bei welchem ein von einer an der Badewanne anzubringenden Halterung getragenes Wasserstandsmessgerät bei Erreichen einer vorgesehenen Wassereinlaufhöhe ein akustisches Signal auslöst und/oder ein den Wasserzulauf absperrendes Steuergerät betätigt. Das ggf. in seiner Anbringhöhe bezüglich der Badewanne verstellbare Wasserstandsmessgerät besteht aus einem Schwimmer oder aus zwei Elektroden, die einen Stromdurchfluss in einem elektrischen Kreis zur Anzeige bringen, der bei Eintauchen der Elektroden in das Badewannenwasser auftritt, wobei die Stromflussänderung zur Auslösung des Signalgerätes dient. Es ist auch bekannt, einen als Thermoelement ausgebildeten Sensor zu verwenden, dessen elektrischer Widerstandswert sich unter dem Einfluss des Mediums, also beispielsweise des warmen Badewannenwassers, ändert. Ebenso ist die Anordnung von Drucksensoren an Badewannen bekannt, die auf den statischen Druck des Badewannenwassers ansprechen. Diese bekannten Wasserstandsmessgeräte sind in ihrer Dauerfunktion insbesondere dadurch beeinträchtigt, dass sie leicht verschmutzen und u.a. der Kalkablagerung des Wannenwassers ausgesetzt sind. Ein weiterer Nachteil besteht darin, dass die Messgeber dieser bekannten Einrichtungen in die Badewanne eintauchen müssen und damit die Bewegungsfreiheit der badenden Person einschränken. Letzteres wird zwar bei der aus DE-A 2 853 981 bekannten Füllstandssteuerung für Badewannen vermieden, bei welcher eine senkrecht zum Wasserspiegel gerichtete Sende- und Empfangseinrichtung, beispielsweise am Wassereinlaufrohr der Badewanne, vorgesehen ist und durch Vergleich der tatsächlichen Laufzeit von abgestrahlter und reflektierter Welle mit einer sich aus der vorgewählten Füllhöhe ergebenden Laufzeit auf den jeweiligen Wasserstand geschlossen bzw. bei Erreichen der gewünschten Wassereinlaufhöhe über eine Steuereinrichtung das Wasserzulaufventil abgesperrt wird. Diese in Art eines Radars arbeitende Füllstandssteuerung ist recht aufwendig und teuer in der Herstellung.

Auch ist aus GB-A 1 562 141 ein Gerät zur Überwachung des Flüssigkeitsstandes in Kunststoffbehältern, insbesondere in Bremsflüssigkeitsbehältern von Kraftfahrzeugen bekannt, mit einem auf der Aussenseite der Behälterwand angeordneten kapazitiven Sensor. Der kapazitive Sensor dient dabei lediglich als Kontrollelement, indem dieser ein Element eines Schwingkreises bildet, dessen Ausgang mit einer optischen Anzeigeeinrichtung verbunden ist.

Aus der DE-A 2 417 708 und ebenso aus der DE-A 1 802 311 ist eine Badewanne mit integrierter Whirlpool-Einrichtung, d.h. mit in der seitlichen Wannenwand angeordneten Wasserstrahlaustrittsöffnungen, bekannt. Die Wasserstrahlaustrittsöffnungen stehen in Strömungsverbindung mit einem ausserhalb der Wanne angeordneten Kanalsystem, welches mit einer Druckleitung einer Pumpe verbunden ist, deren Saugleitung in das Wanneninnere mündet. Zum Betrieb der Whirlpool-Einrichtung ist zunächst die Wanne zumindest bis zu einer die Wasserstrahlaustrittsöffnung übersteigenden Füllhöhe mit Wasser zu füllen. Danach kann die Pumpe eingeschaltet werden, wodurch das aus dem Wanneninneren angesaugte Wasser über das Kanalsystem und die Wasserstrahlaustrittsöffnungen in das Wanneninnere eingedüst und ein Massageeffekt erzielt wird. Bei diesen bekannten Badewannen mit manuell zu betätigender Whirlpool-Einrichtung besteht jedoch die Gefahr einer Fehlbedienung, indem die Pumpe der Wasserstrahleinrichtung eingeschaltet wird, bevor der Wasserfüllstand in der Wanne die Wasserstrahlaustrittsöffnungen überdeckt und das eingedüste Wasser über den Wannenrand, bspw. in das Innere eines Badezimmers, spritzt.

Schliesslich ist aus «Messen, Steuern und Regeln in der chemischen Technik», Bd. I Betriebsmesstechnik I, Springer-Verlag, Berlin, Heidelberg, New York 1980, S. 613, Abs. 7.5.1 der Einsatz von kapazitiven Füllstandsmessgeräten zur Grenzüberwachung bekannt.

Aufgabe der vorliegenden Erfindung ist es, bei einer Badewanne mit Whirlpool-Einrichtung ein Gerät anzugeben, welches ohne zu verschmutzen sicher und über grosse Betriebsdauern möglichst störungsfrei arbeitet und gewährleistet, dass bei Betätigung der Whirlpool-Einrichtung kein Wasser über den Wannenrand spritzt.

Zur Lösung dieser Aufgabe ist es nach der Erfindung vorgesehen, an einer eine Whirlpool-Einrichtung aufweisenden Badewanne aus Kunststoff, wie bspw. Polyacryl, einen als kapazitiven Näherungsschalter ausgebildeten, zum Abfühlen des Wasserstandes vorgesehenen Sensor zu verwenden, wobei der Sensor auf der Aussenseite der Badewanne angeordnet ist und sich oberhalb der Wasserstrahlaustrittsöffnung der eine Pumpe aufweisenden Whirlpool-Einrichtung befindet und wobei der Sensor ein Einschalten der Pumpe nur dann erlaubt, wenn der Wasserstand oberhalb der Wasserstrahlaustrittsöffnung ist.

Hierdurch wird erreicht, dass das Wasser der Whirlpool-Einrichtung nicht über den Wannenrand hinausspritzen kann, was der Fall wäre, wenn zu wenig Wasser in der Badewanne ist und die Wasserstrahlaustrittsöffnung praktisch freiliegt. Die Erfindung ist insbesondere dann von besonderem Vorteil, wenn jemand das Badewannenwasser gewollt oder ungewollt abfliessen lässt und dadurch die Wasserstrahlaustrittsöffnung der Whirlpool-Einrichtung unterhalb des Wasserstandes gelangt. Durch die erfindungsgemässe Massnahme, dass der Sensor erst dann anspricht, wenn der Wasserstand oberhalb der Wasserstrahlaustrittsöffnung liegt, ist diese in jedem Fall vom Badewasser hinreichend überdeckt. Der Sensor selbst kommt mit dem Badewannenwasser nicht in Berührung, so dass er unempfindlich gegen Verschmutzung und wenig störanfällig ist. Bei dieser Anordnung des Sensors hinter der Wand der Badewanne wird auch ein potentieller Leckagefaktor ausgeschlossen. Ein weiterer Vorteil der Erfindung besteht darin, dass der Wasserstand in der Badewanne zugleich mitüberwacht wird.

In Weiterbildung des Erfindungsgedankens ist der Sensor in seiner Anbringungshöhe an der Badewanne verstellbar, so dass er wahlweise auf unterschiedliche Wasserstände ansprechen kann.

Bei einer weiteren Ausführungsart des Erfindungsgedankens ist der Sensor in seiner Ansprechempfindlichkeit einstellbar. Hierdurch ist es möglich, den Sensor an vorgegebene Badewannenwandmaterialien und/oder -stärken anzupassen.

Vorzugsweise gibt der Sensor ein akustisches und/oder optisches Signal ab, wenn ein vorgegebener Wasserstand erreicht ist. Auf diese Weise wird dem Benutzer wirksam angezeigt, dass der gewünschte Wasserstand erreicht ist und er den Wasserzulauf abdrehen kann.

Noch zweckmässiger ist es, wenn der Sensor bei Erreichen eines vorgegebenen Wasserstandes das Wassereinlaufventil selbsttätig schliesst. Hierdurch wird selbsttätig verhindert, dass die Badewanne überläuft, auch wenn der Benutzer das Abstellen des Wassereinlaufes vergisst.

Um sicher zu sein, dass der Sensor funktionsfähig ist, hat dieser bei einer weiteren Ausgestaltung des Erfindungsgedankens eine Funktionsanzeigeeinrichtung, z.B. ein LED-Element.

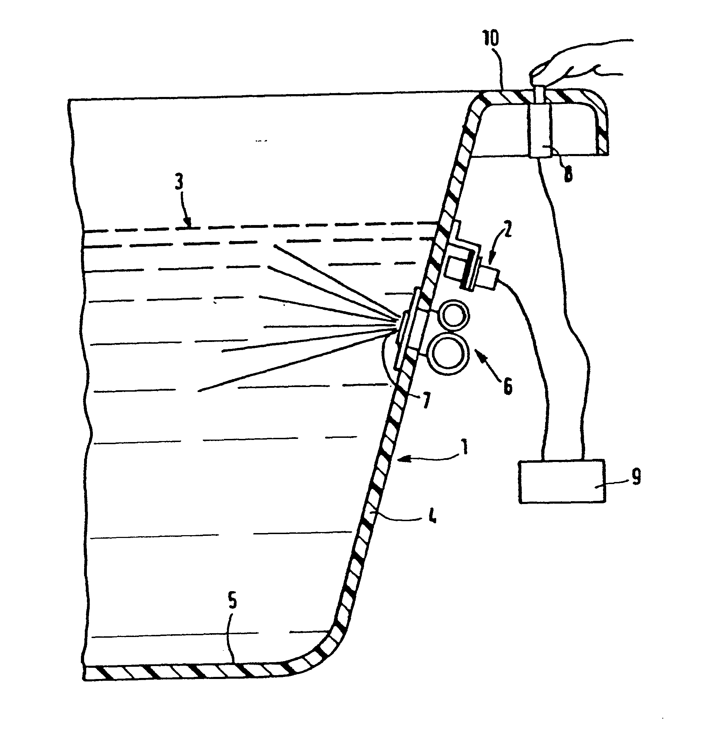

Die einzige Figur veranschaulicht im Vertikalschnitt eine Badewanne mit einer den Erfindungsgedanken verwirklichenden Sensor-Einrichtung (teilweise weggebrochen).

Die Sensor-Einrichtung für eine Badewanne 1 hat einen Sensor 2 zum Abfühlen des Wasserstandes 3, der als kapazitiver Näherungsschalter ausgebildet ist. Der Sensor 2 ist auf der Aussenseite des Wannenkörpers 4 in vorgegebener Höhe über der Bodeninnenfläche 5 der Badewanne 1 angeordnet. Er kommt dadurch mit dem Badewannenwasser nicht in Berührung, kann aber den Wasserstand 3 anzeigen.

Die dargestellte Badewanne 1 hat eine Whirlpool-Einrichtung 6 mit einer Wasserstrahlaustrittsöffnung 7 in vorgegebener Höhe über der Bodeninnenfläche 5 der Badewanne 1. Der Sensor 2 ist oberhalb der Wasserstrahlaustrittsöffnung 7 angeordnet, so dass der Sensor 2 erst dann anspricht, wenn die Wasserstrahlaustrittsöffnung 7 hinreichend mit Wasser bedeckt ist. Der Sensor 2 liefert in dem dargestellten Beispiel ein Signal an eine Schalteinrichtung 9, von welcher aus die Whirlpool-Einrichtung 6 und/oder der Wassereinlauf zu der Badewanne 1 gesteuert bzw. geschaltet wird. Diese Schaltung ist so vorgesehen, dass die Pumpe der Whirlpool-Einrichtung 7 elektrisch nur anschaltbar ist, wenn der Sensor 2 angesprochen hat, d.h. der Wasserstand 3 oberhalb der Wasserstrahlaustrittsöffnung 7 liegt. Die elektrische Schaltung kann aber zusätzlich auch so vorgenommen sein, dass beim Ansprechen des Sensors 2 selbsttätig das Wassereinlaufventil der Badewanne 1 geschlossen wird. Sinkt der Wasserstand 3 beispielsweise wieder unter die Wasserstrahlaustrittsöffnung 7, schaltet sich die Pumpe der Whirlpool-Einrichtung 6 wieder ab. Auf diese Weise wird jedenfalls gewährleistet, dass der zum Teil recht kräftige Wasserstrahl der Whirlpool-Einrichtung 6 nicht über den Rand 10 der Badewanne 1 hinausspritzen kann.

Der auf der Aussenseite des Wannenkörpers 4 angeordnete Sensor 2 ist einer Verschmutzung durch das Badewannenwasser, insbesondere einer Kalkablagerung, nicht ausgesetzt. Dadurch ist eine Funktion über grosse Dauer gewährleistet. Für die Wirksamkeit des Sensors 2 ist kein Durchbruch in der Wannenwand erforderlich, wodurch das Leckagerisiko verringert ist. Es ist ferner kein teurer Sicherheitstransformator notwendig, da es keinen direkten Wasserkontakt zu der gesamten Sensor-Einrichtung gibt. Der als kapazitiver Näherungsschalter ausgebildete Sensor 2 ist mit einer Spannung von beispielsweise 12 Volt betreibbar, so dass die Sensor-Einrichtung unbedenklich in Badezimmern eingesetzt werden kann. Der Sensor 2 kann aufgrund der Einstellbarkeit seines Ansprechvermögens, d.h. seiner Empfindlichkeit, auf verschiedene Wandstärken und Wandmaterialien abgestimmt werden. Die Sensor-Einrichtung hat ferner keine bewegten Teile, so dass sie über grosse Zeitdauer sehr zuverlässig arbeitet. Der Sensor 2 ist auch als Trockenlaufsicherung wirksam und beispielsweise in die elektrische Steuerleitung der Pumpe einschaltbar, derart, dass die Pumpe der Whirlpool-Einrichtung 6 nur angeschaltet werden kann, wenn der Sensor 2 angesprochen hat, d.h. Wasser in der Badewanne 1 ist und die Pumpe Wasser dem Badewanneninneren entnehmen kann und nicht trocken läuft. Ferner ist sichergestellt, dass die Whirlpool-Einrichtung 6 nicht über den Wannenrand 10 hinausspritzen kann, da der Sensor 2 oberhalb der Wasseraustrittsöffnung 7 angeordnet und elektrisch so geschaltet ist, dass die Whirlpool-Einrichtung 6 nur anschaltbar ist, wenn der Sensor 2 anspricht. Von der Sensor-Einrichtung ist im Badewanneninneren überhaupt nichts zu sehen, was einen gestalterischen Vorteil mit sich bringt. Der Sensor 2 kann ausser der selbsttätigen Sperrung des Wassereinlaufventiles und selbsttätigen Freigabe der Pumpe der Whirlpool-Einrichtung 6 auch ein optisches und/oder akustisches Signal abgeben, um den Benutzer auf das Erreichen eines bestimmten Wasserstandes 3 aufmerksam zu machen. Auf diese Weise kann verhindert werden, dass kostbares warmes Wasser verschwendet wird oder gar über den Wannenrand 10 in das Badezimmer ausläuft.

## Patentansprüche

1. Verwendung eines als kapazitiver Näherungsschalter ausgebildeten, zum Abfühlen des Wasserstandes (3) vorgesehenen Sensors (2) an einer eine Whirlpool-Einrichtung (6) aufweisenden Badewanne (1) aus Kunststoff, wie bspw. Polyacryl, wobei der Sensor (2) auf der Aussenseite der Badewanne (1) angeordnet ist und sich oberhalb der Wasserstrahlaustrittsöffnung (7) der eine Pumpe aufweisenden Whirlpool-Einrichtung (6) befindet und wobei der Sensor (2) ein Einschalten dieser Pumpe nur dann erlaubt, wenn der Wasserstand (3) oberhalb der Wasserstrahlaustrittsöffnung (7) ist.

2. Verwendung des Sensors nach Anspruch 1, wobei der Sensor (2) in seiner Anbringungshöhe an der Badewanne (1) verstellbar ist.

3. Verwendung des Sensors nach Anspruch 1 oder 2, wobei der Sensor (2) in seiner Ansprechempfindlichkeit einstellbar ist.

4. Verwendung des Sensors nach einem der Ansprüche 1 bis 3, wobei der Sensor (2) ein akustisches und/oder optisches Signal abgibt, wenn ein vorgegebener Wasserstand (3) erreicht ist.

5. Verwendung des Sensors nach einem der Ansprüche 1 bis 4, wobei der Sensor (2) bei Erreichen eines vorgegebenen Wasserstandes (3) das Wassereinlaufventil schliesst.

6. Verwendung des Sensors nach einem der Ansprüche 1 bis 5, wobei der Sensor (2) eine Funktionsanzeigeeinrichtung, z.B. ein LED-Element, aufweist.

## Claims

1. Use of a sensor (2), which is designed as a capacitance switch and is provided for detecting the water level (3), on a bathtub (1) made of plastics material, for example polyacryl, and comprising a whirlpool device (6), the sensor (2) being arranged on the outside of the bathtub (1) and lying above the water jet outlet (7) of the whirlpool device (6) comprising a pump and the sensor (2) only allowing said pump to be switched on when the water level (3) is above the water jet outlet (7).

2. Use of the sensor according to claim 1, the sensor (2) being adjustable in its fitting height on the bathtub (1).

3. Use of the sensor according to claim 1 or 2, the sensor (2) being adjustable in its response-sensitivity.

4. Use of the sensor according to any one of claims 1 to 3, the sensor (2) emitting an acoustic and/or optical signal when a given water level (3) is reached.

5. Use of the sensor according to any one of claims 1 to 4, the sensor (2) closing the water inlet valve when a given water level (3) is reached.

6. Use of the sensor according to any one of claims 1 to 5, the sensor (2) comprising a function indicator device, e.g. an LED element.

## Revendications

1. Utilisation d'un capteur (2) réalisé en tant que commutateur de proximité capacitif, pour déceler le niveau d'eau (3) dans une baignoire (1) dotée d'un dispositif à tourbillon (6) et faite de matière plastique, par exemple polyacrilique, le capteur (2) étant agencé sur le côté extérieur de la baignoire (1) et se trouvant au-dessus de l'ouverture de sortie (7) de jet d'eau du dispositif à tourbillon (6) qui présente une pompe, et le capteur (2) n'autorisant la mise en marche de cette pompe que si le niveau d'eau (3) est plus haut que l'ouverture se sortie (7) du jet d'eau.

2. Utilisation du capteur selon revendication 1, la hauteur d'agencement du capteur (2) sur la baignoire (1) étant réglable.

3. Utilisation du capteur selon revendication 1 ou 2, le capteur (2) étant réglable quant à sa sensibilité de réponse.

4. Utilisation du capteur selon l'une des revendications 1 à 3, le capteur (2) fournissant un signal acoustique et/ou optique lorsqu'un niveau d'eau prédéterminé (3) est atteint.

5. Utilisation du capteur selon l'une des revendications 1 à 4, le capteur (2) fermant le robinet d'arrivée d'eau lorsqu'un niveau d'eau prédéterminé (3) est atteint.

6. Utilisation du capteur selon l'une des revendications 1 à 5, le capteur (2) présentant un dispositif indicateur de fonctionnement, par exemple un élément à diode électroluminescente.